(19) Europäisches Patentamt
European Patent Office
Office européen des brevets

(11) **EP 4 745 963 A1**

(12) **EUROPEAN PATENT APPLICATION**
published in accordance with Art. 153(4) EPC

(43) Date of publication:
20.05.2026 Bulletin 2026/21

(21) Application number: 24864023.7

(22) Date of filing: 18.03.2024

(51) International Patent Classification (IPC):
*G10L 21/0208* (2013.01)    *G10L 21/0216* (2013.01)
*G10L 25/30* (2013.01)    *B64U 101/30* (2023.01)

(52) Cooperative Patent Classification (CPC):
Y02T 90/00

(86) International application number:
**PCT/CN2024/082168**

(87) International publication number:
**WO 2025/055296 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.09.2023 CN 202311186541**

(71) Applicant: **Hangzhou Zero Zero Technology Co.,
Ltd.
Hangzhou, Zhejiang 311121 (CN)**

(72) Inventors:
• **ZHANG, Xing
Hangzhou, Zhejiang 311121 (CN)**
• **LIU, Weijun
Hangzhou, Zhejiang 311121 (CN)**
• **LI, Mingming
Hangzhou, Zhejiang 311121 (CN)**
• **ZHANG, Tong
Hangzhou, Zhejiang 311121 (CN)**

(74) Representative: **Wang, Bo
Panovision IP
Ebersberger Straße 3
85570 Markt Schwaben (DE)**

(54) **FLIGHT TERMINAL NOISE REMOVAL METHOD, SYSTEM AND DEVICE, AND MEDIUM**

(57)      A method, a system, a device, and a medium for removing flight terminal noise are provided. The method includes (310) obtaining noise data from a plurality of flight terminals. The method further includes (320) training a noise removing model based on the noise data and a plurality of historical sound samples. The historical sound samples include historical noise data and historical ambient sound data. The noise removing model is a machine learning model. The method further includes (330) obtaining first sound data corresponding to image data of a flight terminal to be processed and obtaining second sound data by processing, based on the trained noise removing model, the first sound data. The second sound data is sound data after noise removal.

_300_

FIG. 3

**Description**

**CROSS-REFERENCE TO RELATED APPLICATIONS**

This application claims priority to Chinese Patent Application No. 202311186541.3, filed on September 13, 2023, the contents of which are hereby incorporated by reference.

**TECHNICAL FIELD**

The present disclosure relates to a data processing field, and in particular to a method, a system, a device, and a medium for removing flight terminal noise.

**BACKGROUND**

Unmanned aerial vehicles are often accompanied by various interference noises during audio and video recording. Existing technologies for removing interference noises include microphone array technology, acoustic signal processing algorithms, or the like. However, the aforementioned technologies usually only retain human voices while removing other sounds, which is difficult to meet user requirements.

Therefore, there is a need to propose a method, a system, a device, and a medium for removing flight terminal noise, so as to better meet user requirements.

**SUMMARY**

One or more embodiments of the present disclosure provide a method for removing flight terminal noise. The method includes obtaining noise data from a plurality of flight terminals. The method further includes training a noise removing model based on the noise data and a plurality of historical sound samples. The historical sound samples include historical noise data and historical ambient sound data. The noise removing model is a machine learning model. The method further includes obtaining first sound data corresponding to image data of a flight terminal to be processed. The method further includes obtaining second sound data by processing, based on the trained noise removing model, the first sound data. The second sound data is sound data after noise removal.

One or more embodiments of the present disclosure provide a system for removing flight terminal noise. The system includes an obtaining module, a training module, and a determination module. The obtaining module is configured to obtain noise data from a plurality of flight terminals. The training module is configured to train a noise removing model based on the noise data and a plurality of historical sound samples. The historical sound samples include historical noise data and historical ambient sound data. The noise removing model is a machine learning model. The determination module is configured to obtain first sound data corresponding to image data of a flight terminal to be processed. The determination module is further configured to obtain second sound data by processing, based on the trained noise removing model, the first sound data. The second sound data is sound data after noise removal.

One or more embodiments of the present disclosure provide a device for removing flight terminal noise. The device includes a processor. The processor is configured to perform the method for removing flight terminal noise.

One or more embodiments of the present disclosure provide a computer-readable storage medium. The computer-readable storage medium stores computer instructions, wherein when a computer reads the computer instructions in the storage medium, the computer executes the method for removing flight terminal noise.

**BRIEF DESCRIPTION OF THE DRAWINGS**

The present disclosure will be further described by way of exemplary embodiments. These exemplary embodiments will be described in detail with reference to the accompanying drawings. These embodiments are not limiting. In these embodiments, the same reference numerals refer to the same structures, where:

FIG. 1 is a schematic diagram illustrating an application scenario of a system for removing flight terminal noise according to some embodiments of the present disclosure;

FIG. 2 is a schematic diagram illustrating an exemplary module diagram of a system for removing flight terminal noise according to some embodiments of the present disclosure;

FIG. 3 is a schematic diagram illustrating an exemplary flowchart of a method for removing flight terminal noise according to some embodiments of the present disclosure;

FIG. 4 is a schematic diagram illustrating an exemplary flowchart of a process for synchronizing a control terminal and a flight terminal to be processed according to some embodiments of the present disclosure;

FIG. 5 is a schematic diagram illustrating an exemplary flowchart of a method for removing flight terminal noise according to some other embodiments of the present disclosure; and

FIG. 6 is a schematic diagram illustrating a structure of a device for removing flight terminal noise according to some embodiments of the present disclosure.

**DETAILED DESCRIPTION**

To more clearly illustrate the technical solutions in the embodiments of the present disclosure, the accompanying drawings required for describing the embodiments are briefly described below. Obviously, the accompanying drawings in the following description are merely some examples or embodiments of the present disclosure. For a person of ordinary skill in the art, the present disclosure may be applied to other similar scenarios based on these accompanying drawings without making creative efforts. Unless obvious from the context or otherwise indicated by the context, the same reference numerals in the drawings refer to the same structures or operations.

It should be understood that the terms "system", "device", "unit", and/or "module" used herein are a method for distinguishing components, elements, parts, portions, or assemblies of different levels. However, if other terms can achieve the same purpose, the aforementioned terms may be replaced by other expressions.

As used in the present disclosure and the claims, unless the context clearly indicates an exception, the terms "a", "an", "one", and/or "the" are not limited to the singular form and may include the plural form. Generally, the terms "include" and "comprise" merely indicate that the identified steps and elements are included. These steps and elements do not constitute an exclusive list, and a method or device may also include other steps or elements.

Flowcharts are used in the present disclosure to illustrate operations performed by systems according to the embodiments of the present disclosure. It should be understood that the preceding or following operations are not necessarily performed in exact sequence. On the contrary, the steps may be processed in reverse order or simultaneously. Meanwhile, other operations may be added to these processes, or one or more steps may be removed from these processes.

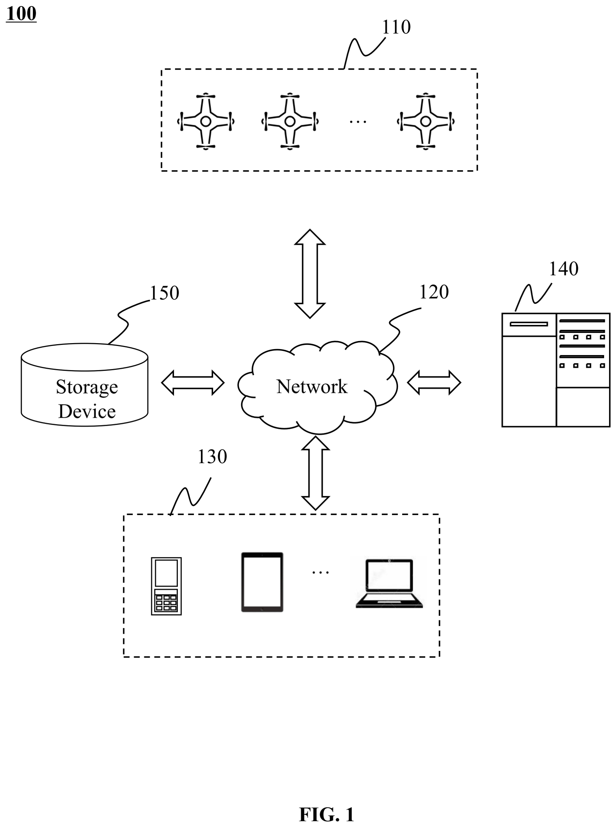

FIG. 1 is a schematic diagram illustrating an application scenario of a system for removing flight terminal noise according to some embodiments of the present disclosure. As shown in FIG. 1, the application scenario 100 of the system for removing flight terminal noise (hereinafter referred to as the application scenario 100) includes a flight terminal 110, a network 120, a control terminal 130, a processor 140, and a storage device 150, or the like.

The flight terminal 110 is configured to collect video and audio within a target scenario. The target scenario may be a scenario requiring audio and video recording. For example, the target scenario may include a square, a scenic spot, or the like. The flight terminal may include an unmanned aerial vehicle with audio and video collection functions, etc. The plurality of flight terminals 110 may be provided, and the plurality of flight terminals 110 may collect audio and video data under different target scenarios, different motion states, and different sound reception distances.

The network 120 includes any suitable network facilitating the exchange of information and/or data of the application scenario 100. In some embodiments, one or more components of the application scenario 100 (e.g., the flight terminal 110, the control terminal 130, the processor 140, and the storage device 150) may transmit information and/or data to one or more other components of the application scenario 100 via the network 120. For example, the processor 140 may obtain audio data (e.g., noise data, ambient sound data), or the like from the control terminal 130 via the network 120. In some embodiments, the network 120 is one or more of wired networks and wireless networks. In some embodiments, the network may be various topological structures such as point-to-point, shared, centralized, or the like, or a combination of multiple topological structures.

The control terminal 130 is configured to control the flight terminal 110. For example, the control terminal 130 may control take-off and landing of the flight terminal 110, and collect audio and video data, or the like. The control terminal 130 includes a mobile device, a tablet computer, a laptop computer, or the like, or any combination thereof.

In some embodiments, the control terminal 130 may interact with other components in the application scenario 100 via the network 120. For example, the control terminal 130 may receive noise data, ambient sound data, or the like sent by the flight terminal 110.

In some embodiments, the control terminal 130 may receive information and/or instructions input by users. The control terminal 130 may send the received information and/or instructions to the flight terminal 110 or the processor 140 via the network 120. For example, the user may input operation instructions for the flight terminal 110 through the control terminal 130. In some embodiments, the control terminal 130 may display video data and/or audio data collected by the flight terminal 110, or the like.

The processor 140 may process data and/or information obtained from the flight terminal 110, the control terminal 130, and/or the storage device 150.

In some embodiments, the processor 140 is configured to obtain noise data from the plurality of flight terminals. The processor 140 is configured to train a noise removing model based on the noise data and a plurality of historical sound samples. The processor 140 is configured to obtain first sound data corresponding to image data of a flight terminal to be processed. The processor 140 is configured to obtain second sound data by processing, based on the trained noise removing model, the first sound data.

In some embodiments, the processor 140 is a single server or a server group. The server group is centralized or distributed. In some embodiments, the processor 140 is local or remote. The processor 140 may directly connect to the flight terminal 110, the control terminal 130, and the storage device 150 to access stored or obtained information and/or data.

In some embodiments, the processor 140 is implemented on a cloud platform. Merely by way of example, the cloud platform may include private clouds, public clouds, hybrid clouds, community clouds, distributed clouds, internal clouds, multi-layer clouds, or the like, or any combination thereof.

The storage device 150 is configured to store data and/or instructions. In some embodiments, the storage device 150 may store data obtained from the flight terminal 110, the control terminal 130, and/or the processor 140. For example, the storage device 150 may store noise data collected by the flight terminal and first sound data collected by the control terminal.

In some embodiments, the storage device may further store second sound data obtained after processing the first sound data based on the trained noise removing model, or the like.

In some embodiments, the storage device 150 is configured to store data and/or instructions for the processor 140 to perform the exemplary processes described in the present disclosure. In some embodiments, the storage device 150 may include mass storage devices, removable storage devices, volatile read-write memories, read-only memories (ROM), or the like, or any combination thereof. In some embodiments, the storage device 150 may be implemented on a cloud platform.

In some embodiments, the storage device 150 may be connected to the network 120 to communicate with one or more components of the application scenario 100 (e.g., the flight terminal 110, the control terminal 130, the processor 140, or the like). One or more components of the application scenario 100 may access the data or instructions stored in the storage device 150 via the network 120.

In some embodiments, the storage device 150 may directly connect to or communicate with one or more components of the application scenario 100. In some embodiments, the storage device 150 may be part of the processor 140.

It should be noted that the application scenario 100 is provided merely for illustrative purposes, and is not intended to limit the scope of the present disclosure. For a person of ordinary skill in the art, various modifications or changes may be made according to the descriptions of the present disclosure. For example, the control terminal 130 and the processor 140 may share a single storage device, or each may have a respective storage device. However, such changes and modifications will not depart from the scope of the present disclosure.

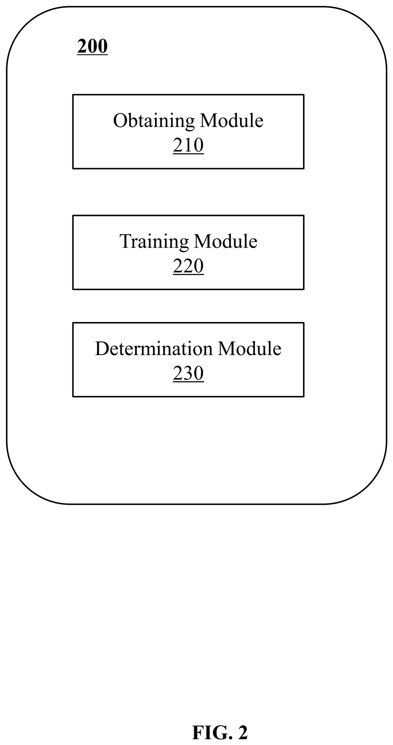

FIG. 2 is a schematic diagram illustrating an exemplary module diagram of a system for removing flight terminal noise according to some embodiments of the present disclosure. As shown in FIG. 2, the system 200 for removing flight terminal noise (hereinafter referred to as the system 200) may include an obtaining module 210, a training module 220, and a determination module 230.

The obtaining module 210 is configured to obtain noise data from a plurality of flight terminals.

The training module 220 is configured to train a noise removing model based on the noise data and a plurality of historical sound samples. The historical sound samples include historical noise data and historical ambient sound data. The noise removing model is a machine learning model.

The determination module 230 is configured to obtain first sound data corresponding to image data of a flight terminal to be processed. The determination module 230 is configured to obtain second sound data by processing, based on the trained noise removing model, the first sound data. The second sound data is sound data after noise removal.

In some embodiments, the determination module 230 includes a control terminal. The control terminal used to acquire the first sound data. The control terminal and the flight terminal to be processed are time-synchronized using a preset algorithm. The first sound data and the image data correspond to each other based on synchronized time.

In some embodiments, the determination module 230 is further configured to control the control terminal to obtain the first sound data when the flight terminal to be processed acquires the image data.

In some embodiments, the noise data is acquired based on the plurality of flight terminals with different scenarios, different motion states, and different sound reception distances.

In some embodiments, the system 200 for removing flight terminal noise further includes a video output module (not shown in the FIGs).

In some embodiments, the flight terminal to be processed may send the collected image data to the processor. In some embodiments, the video output module is configured to query the processor whether second sound data corresponding to the image data exists; if so, the video output module is configured to synthesize the image data and the second sound data and send the synthesized data to the control terminal for user viewing; otherwise, the video output module is configured to send the image data directly to the control terminal for user viewing.

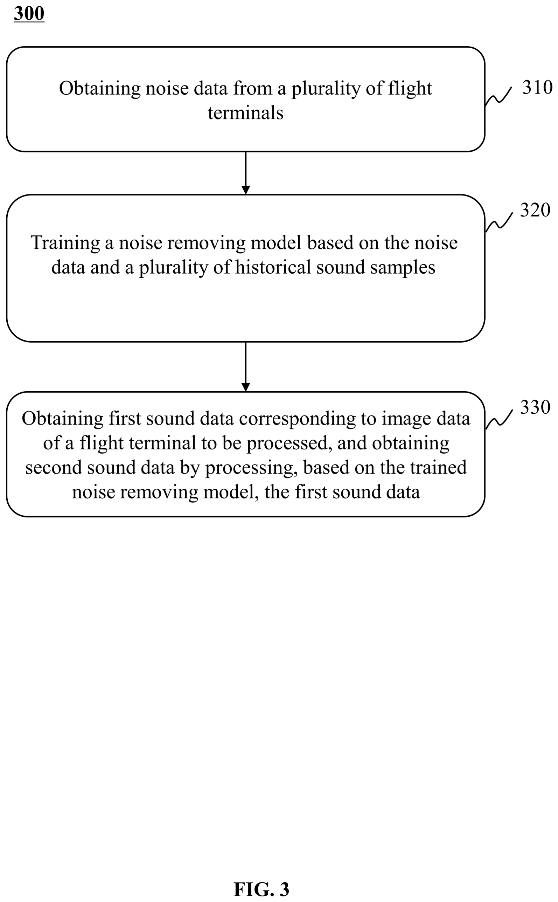

More descriptions regarding the execution of corresponding instructions by the system 200 and each of its modules to implement the method for removing flight terminal noise according to any embodiment of the present disclosure may be found in the related parts of the present disclosure below (e.g., FIGs. 3-4 and related descriptions thereof).

It should be noted that the above descriptions of the system for removing flight terminal noise 200 and its modules are merely provided for convenience of description, and are not intended to limit the present disclosure to the scope of the illustrated embodiments. It may be understood that, for a person of ordinary skill in the art, after understanding the principle of the system, various combinations of the modules may be made, or subsystems may be formed to connect with other modules without departing from the principle. In some embodiments, the obtaining module 210, the training module 220, and the determination module 230 disclosed in FIG. 2 may be different modules in one system, or a single module may implement the functions of two or more of the aforementioned modules. For example, each module may share a single storage module, or each module may have a respective storage module. Such modifications and variations are all within the scope of the present disclosure.

FIG. 3 is a schematic diagram illustrating an exemplary flowchart of a method for removing flight terminal noise according to some embodiments of the present disclosure. In some embodiments, the process 300 may be executed by a processor. As shown in FIG. 3, the process 300 includes the following steps.

In 310, noise data of a plurality of flight terminals is obtained.

The noise data to be removed in the flight terminal includes data corresponding to noise generated by the flight terminal itself. For example, the noise data includes fan noise, propeller noise, or the like.

In some embodiments, the noise data may be acquired based on collection performed by a single flight terminal in a quiet scenario.

In some embodiments, the noise data may be acquired based on flight terminals with different scenarios, different motion states, and different sound reception distances. In some embodiments, the noise data may be acquired via control terminals. More descriptions regarding the control terminal may be found in FIG. 1.

In some embodiments, the scenarios for collecting noise data may include a plurality of scenarios with different space sizes. For example, the scenarios include indoor quiet environments (e.g., a single-person room, a small meeting room, a large meeting room, a gymnasium, or the like), outdoor quiet environments (e.g., a corridor, an open lawn, or the like). In some embodiments, the scenarios for collecting noise data may further include a plurality of special scenarios. For example, the scenarios include a roof, a strong wind weather scenario, a scenario where propellers of the flight terminal are incomplete or damaged, or the like.

Different motion states refer to motion states of the flight terminal when noise is collected. In some embodiments, the motion states of the flight terminal may include hovering, vertical movement (e.g., vertical acceleration, uniform speed, braking, hovering movement, or the like), horizontal movement (e.g., horizontal acceleration, uniform speed, braking, hovering, or the like), wind-resistant hovering (i.e., hovering under windy conditions), and other abnormal motion states (e.g., load bearing, drag interference, overturning, or the like).

The sound reception distances refer to the distances between the control terminals and the flight terminals when the noise data is collected. For example, the sound reception distance may be divided into close proximity, relatively short distance, relatively long distance, or the like based on different sound reception thresholds. The sound reception thresholds may be preset.

In some embodiments of the present disclosure, noise acquired from the plurality of flight terminals with different scenarios, different motion states, and different sound reception distances is more broadly applicable, and the noise removing model trained based on the noise data can remove noise more accurately and efficiently.

In 320, a noise removing model is trained based on the noise data and a plurality of historical sound samples.

The historical sound samples refer to ambient sound data in historical data. The ambient sound data refers to audio data to be retained after removing the noise data. For example, the ambient sound data includes sounds of various natural environments (e.g., wind sound, water sound), human voices, or the like. The historical sound samples may be acquired via manual pre-collection.

The noise removing model is configured to filter out noise in audio data collected based on the flight terminal. The noise removing model is a machine learning model. For example, the noise removing model may include a neural network model, a deep neural network model, or the like.

In some embodiments, an input of the noise removing model may include first sound data corresponding to image data of a flight terminal to be processed, and an output of the noise removing model may include second sound data. More descriptions regarding the first sound data and the second sound data may be found in step 330.

In some embodiments, the processor may synthesize the noise data and the historical sound samples as training samples for training the noise removing model. The processor may label the historical sound samples in the synthesized training samples as training labels.

In some embodiments of the present disclosure, the noise removing model trained based on training samples synthesized from noise and ambient sound data collected in different scenarios is capable of filtering out multiple types of noise and provides effective noise removal across diverse conditions.

In 330, first sound data corresponding to image data of a flight terminal to be processed is obtained, and second sound data is obtained by processing, based on the trained noise removing model, the first sound data.

The flight terminal to be processed refers to a flight terminal requiring noise filtering.

The image data refers to data of images such as videos acquired by the flight terminal to be processed.

The first sound data refers to audio data corresponding to the flight terminal to be processed when the flight terminal to be processed acquires the image data. In some embodiments, the first sound data may include ambient sound corresponding to the scenario where the flight terminal to be processed collects the image data and noise of the flight terminal to be processed. The first sound data may be acquired via a control terminal.

It can be understood that, to ensure better user experience and avoid audio-visual asynchronization, it is necessary to ensure temporal synchronization between the image data of the flight terminal to be processed and the corresponding first sound data. In some embodiments, when the flight terminal to be processed acquires the image data, the control terminal acquires the first sound data. That is, when the flight terminal to be processed starts to acquire the image data, the processor sends an instruction for starting to acquire the first sound data to the control terminal.

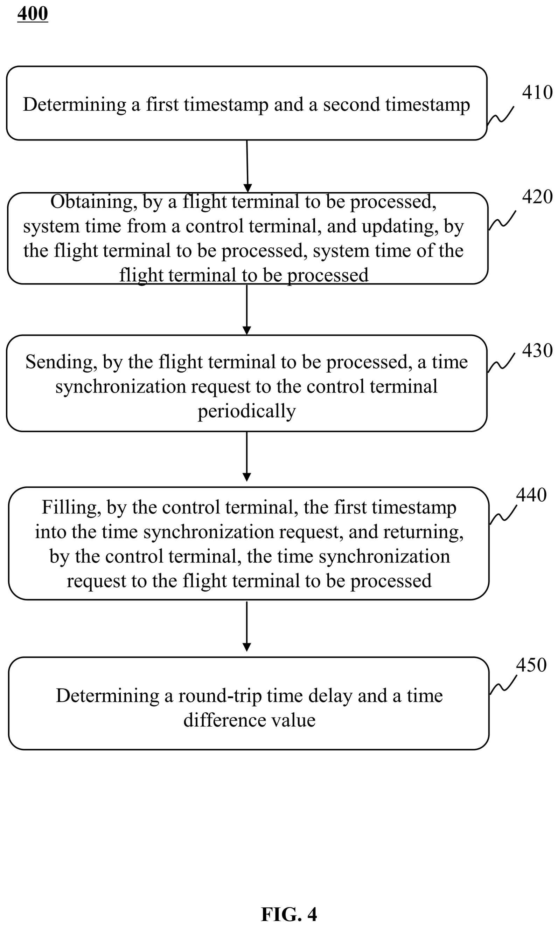

In some embodiments, the control terminal and the flight terminal to be processed are time-synchronized using a preset algorithm, and the first sound data and the image data correspond to each other based on synchronized time. More descriptions regarding related embodiments may be found in other contents of the present disclosure (e.g., descriptions in connection with FIG. 4).

The second sound data refers to sound data after noise removal. In some embodiments, the second sound data may include ambient sound data corresponding to the image data. For example, the second sound data includes natural sounds corresponding to the image data (e.g., wind sound, water sound), human voices, or the like.

In some embodiments, the processor may input the first sound data into the trained noise removing model, and the noise removing model outputs the second sound data after removing noise from the first sound data.

In some embodiments, after the flight terminal to be processed takes off, the processor may determine whether the flight terminal to be processed is in an image data collection state; when the flight terminal to be processed is in the image data collection state, the processor may send an instruction for starting to acquire the first sound data to the control terminal; otherwise, the control terminal does not acquire sound data.

In some embodiments of the present disclosure, the control terminal starts recording only when the flight terminal to be processed is in the image data collection state, which can save resources.

In some embodiments, the processes of obtaining the first sound data and filtering out noise from the first sound data may be processed in parallel. That is, when the control terminal obtains the first sound data, the control terminal may input part of the obtained first sound data into the noise removing model at preset time intervals (e.g., 30 seconds), and the noise removing model filters out noise from the input first sound data.

In some embodiments of the present disclosure, parallel processing of obtaining the first sound data and filtering out noise from the first sound data can accelerate the processing speed of the first sound data and improve efficiency.

In some embodiments, after a user inputs an instruction for stopping image data acquisition, the processor may control the flight terminal to be processed to stop acquiring the image data, and simultaneously send an instruction for stopping acquiring the first sound data to the control terminal.

In some embodiments, after the collection of the image data is stopped, the flight terminal to be processed may send the collected image data to the processor. In some embodiments, the processor may query whether there is second sound data corresponding to the image data; if yes, the processor may synthesize the image data and the second sound data before sending the synthesized data to the control terminal for users to view; if no, the processor may directly send the image data to the control terminal for users to view.

It should be noted that the method for removing flight terminal noise described in the aforementioned embodiments is not only applicable to removing noise of flight terminals, but also can achieve filtering of specific types of noise by collecting different types of noise as training samples.

In some embodiments of the present disclosure, the method for removing flight terminal noise can specifically filter out noise (e.g., propeller noise, fan noise of the flight terminal) in collected sound data while retaining other sounds. For example, the process can retain wind sound and water sound while removing propeller noise and fan noise of the flight terminal, so as to improve the realism of videos. The process of the present embodiment has good universality and can meet different sound data filtering requirements of users.

FIG. 4 is a schematic diagram illustrating an exemplary flowchart of a process for synchronizing a control terminal and a flight terminal to be processed according to some embodiments of the present disclosure. In some embodiments, the control terminal and the flight terminal to be processed may achieve time synchronization based on a preset algorithm, and the preset algorithm is shown as the process 400. In some embodiments, the process 400 may be executed by a processor. As shown in FIG. 4, the process 400 includes the following steps.

In 410, a first timestamp and a second timestamp are determined.

The first timestamp refers to a timestamp corresponding to the control terminal.

The second timestamp refers to a timestamp corresponding to the flight terminal to be processed.

In some embodiments, the first timestamp and the second timestamp may be acquired by the control terminal and the flight terminal to be processed, respectively.

In some embodiments, the first timestamp and the second timestamp may be dynamically updated. More descriptions regarding updating the first timestamp and the second timestamp may be found in the related parts of the present disclosure below.

In 420, the flight terminal to be processed obtains system time from the control terminal and updates system time of the flight terminal to be processed.

In some embodiments, the flight terminal to be processed may send a request for obtaining system time to the control terminal; after receiving the system time from the control terminal, the flight terminal to be processed may update the system time of the flight terminal to be processed to the system time from the control terminal.

In 430, the flight terminal to be processed sends a time synchronization request to the control terminal periodically.

In some embodiments, the flight terminal to be processed may periodically send a time synchronization request to the control terminal. The time synchronization request sent by the flight terminal to be processed includes the second timestamp. A cycle for sending the time synchronization request may be preset.

In some embodiments, the flight terminal to be processed may determine the second timestamp based on the updated system time, fill the second timestamp into the time synchronization request, and send the time synchronization request to the control terminal. For example, if the updated system time is T, and a time difference between a moment of sending the time synchronization request and the updated system time is t, the second timestamp at the moment of sending the time synchronization request is T+t.

In 440, the control terminal fills the first timestamp into the time synchronization request and returns the time synchronization request to the flight terminal to be processed.

In some embodiments, after receiving the time synchronization request, the control terminal may fill the system time corresponding to the control terminal into the time synchronization request as the first timestamp, and return the time synchronization request to the flight terminal to be processed.

In 450, a round-trip time delay and a time difference value are determined.

The round-trip time delay refers to a delay from the time when a sender sends data to the time when a receiver receives the data and returns a response. For example, the round-trip time delay may be a time delay from the moment when the flight terminal to be processed sends the time synchronization request to the moment when the flight terminal to be processed receives the time synchronization request returned by the control terminal again.

The time difference value refers to a time difference value between the flight terminal to be processed and the control terminal. For example, the time difference value may be a difference value between the first timestamp and the second timestamp.

In some embodiments, to further improve accuracy of the time difference value, the processor may process the time difference value based on a filtering algorithm to determine a filtered time difference value. Exemplarily, the filtered time difference value may be determined based on the following formula (1):

$$\Delta T = \alpha \times T_n + (1 - \alpha) \times T_{n-1}$$

where $\Delta T$ represents the filtered time difference value; $T_n$ represents the time difference value of a current cycle; $T_{n-1}$ represents the time difference value of a previous cycle; $\alpha$ represents a filtering coefficient, which is usually set in a range of 0.1 to 0.5.

In some embodiments, the filtering coefficient may be obtained through experiments and debugging based on factors such as actual time synchronization requirements, noise conditions, system characteristics, or the like.

In some embodiments, the processor may determine a corresponding filtered time difference value in each cycle when the flight terminal to be processed sends the time synchronization request to the control terminal; when the filtered time difference value is less than a preset threshold, the flight terminal to be processed and the control terminal are synchronized, and the flight terminal to be processed stops sending the time synchronization request to the control terminal.

In some embodiments, the first sound data and the image data may correspond to each other based on synchronized time. For example, the flight terminal to be processed and the control terminal may start acquiring the image data and the first sound data simultaneously based on the synchronized time.

In some embodiments, when real-time display of video collected by the flight terminal to be processed is required, the processor may perform real-time fusion of the images collected by the flight terminal to be processed and the sound collected by the control terminal based on the synchronized time. For example, the fused data may be projected onto an on-site large screen in real time or transmitted to a remote terminal. The sound data has noise generated by the flight terminal itself removed while retaining other ambient sounds, thereby preserving environmental audio fidelity. Real-time fusion of the images and the sound enables synchronized audio-visual output.

In some embodiments of the present disclosure, time synchronization between the flight terminal to be processed and the control terminal through the preset algorithm enables precise time alignment between the two, thereby improving communication efficiency and reliability. In addition, in practical applications, filtering parameters may be adjusted according to specific requirements, such as selection of the filtering coefficient $\alpha$, to optimize time synchronization performance.

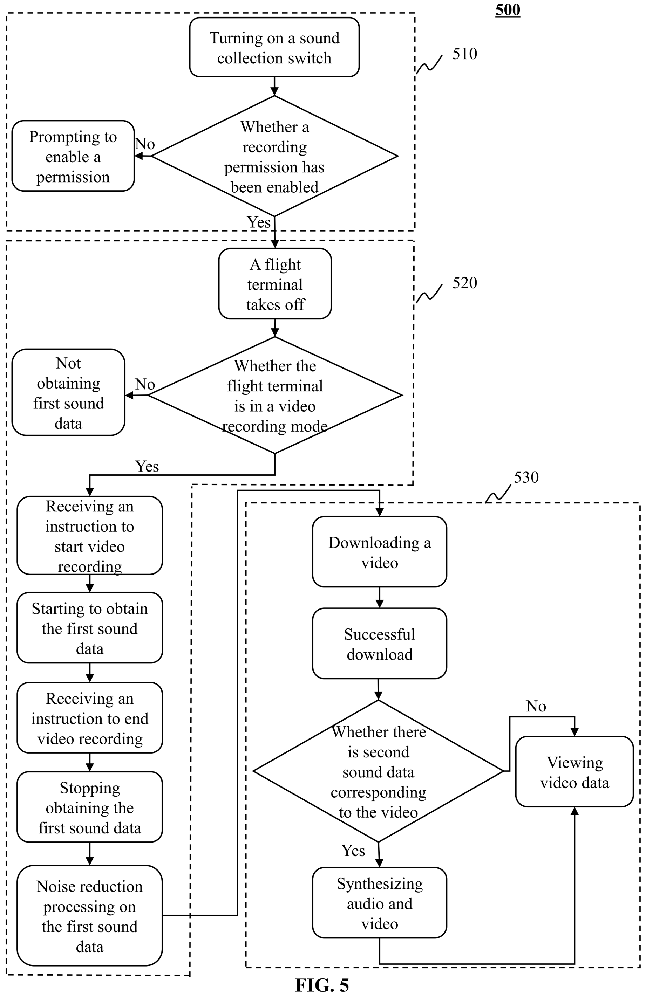

FIG. 5 is a schematic diagram illustrating an exemplary flowchart of a method for removing flight terminal noise according to some other embodiments of the present disclosure. In some embodiments, the process 500 may be executed by a processor. As shown in FIG. 5, the process 500 includes the following steps.

In 510, sound collection is enabled.

Enabling sound collection refers to enabling the sound collection permission of the control terminal.

As shown in FIG. 5, the processor may send an instruction for turning on a sound collection switch to the control terminal; after receiving the instruction for turning on the sound collection switch, the control terminal determines whether a recording permission has been enabled. In response to a negative result, the control terminal prompts the user to enable the recording permission; in response to an affirmative result, the method proceeds to step 520.

In some embodiments, the sound collection function may also be enabled by default, that is, the processor may directly execute the process for removing flight terminal noise starting from step 520.

In 520, first sound data corresponding to image data of a flight terminal to be processed is obtained and noise reduction is performed on the first sound data.

As shown in FIG. 5, in response to the enabled recording permission, a flight terminal takes off; after the flight terminal takes off, the processor determines whether the flight terminal is in a video recording mode. When the flight terminal is not in the video recording mode, the control terminal does not obtain first sound data.

When the flight terminal is in the video recording mode, the processor sends an instruction indicating that the flight terminal has started video recording to the control terminal; after receiving the instruction, the control terminal starts to obtain the first sound data. In some embodiments, the video recording operation of the flight terminal and the operation of obtaining the first sound data by the control terminal need to be synchronized in time. More descriptions regarding time synchronization may be found in the relevant descriptions of FIG. 4.

After video recording is completed, the processor may simultaneously send an instruction for ending video recording to the flight terminal and the control terminal. After receiving the instruction for ending video recording, the flight terminal stops video recording; after receiving the instruction for ending video recording, the control terminal stops obtaining the first sound data.

In some embodiments, the processor may perform noise reduction processing on the obtained first sound data. In some embodiments, the processor may perform noise reduction processing on the first sound data based on the noise removing model to obtain second sound data. More descriptions regarding the noise reduction processing on the first sound data may be found in the relevant descriptions of FIG. 3.

In 530, synthesis processing is performed.

Synthesis processing refers to synthesizing a video recorded by the flight terminal and the first sound data (i.e., audio) obtained by the control terminal.

As further shown in FIG. 5, the flight terminal may upload the recorded video to the storage device 150 via the network 120, and the control terminal 130 downloads the video from the storage device 150 via the network 120. It can be understood that the control terminal may also obtain the video through other means, for example, directly obtain the video from the flight terminal via the network 120, or the like.

After the video is successfully downloaded, the processor may determine whether there is second sound data corresponding to the video in the control terminal. When there is no second sound data corresponding to the video in the control terminal, the video is directly provided to the user for viewing, that is, the user views a video without audio at this time. When there is second sound data corresponding to the video in the control terminal, the processor may perform real-time fusion on the downloaded video and the second sound data, and provide the fused video to the user for viewing, that is, the user views synchronized audio and video at this time.

It should be noted that the above descriptions regarding the processes 300, 400, and 500 are merely provided for illustration and explanation, and are not intended to limit the scope of application of the present disclosure. For a person skilled in the art, various modifications and changes may be made to the processes 300, 400, and 500 under the guidance of the present disclosure. However, such modifications and changes are still within the scope of the present disclosure.

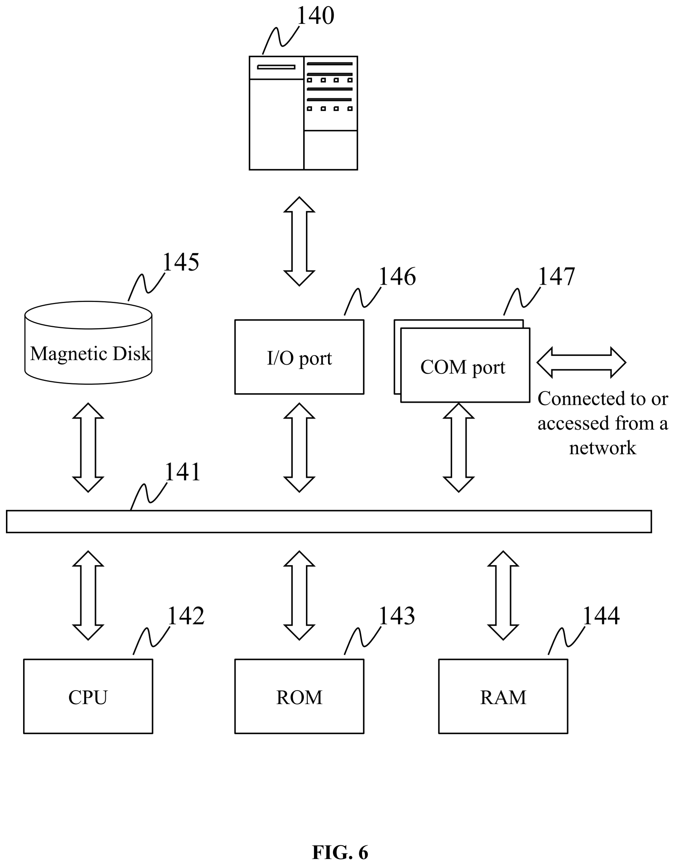

FIG. 6 is a schematic diagram illustrating a structure of a device for removing flight terminal noise according to some embodiments of the present disclosure. The functions of the processor 140 or a part thereof may be implemented by a computer via its hardware, software programs, firmware, or a combination thereof. Although only one computer is shown for convenience, the computer functions related to the processor 140 as described herein may be implemented in a distributed manner on a plurality of similar platforms to distribute processing loads. In some embodiments, the computer may be a general-purpose computer or a special-purpose computer.

As shown in FIG. 6, the processor 140 may include a communication (COM) port 147, which may be connected to or accessed from a network to facilitate data communication. The processor 140 may further include a Central Processing Unit (CPU) 142 composed of one or more processors and configured to execute program instructions. The computer platform may include an internal communication bus 141 and data storage components (e.g., a magnetic disk 145, a Read-Only Memory (ROM) 143, a Random Access Memory (RAM) 144). The data storage components are configured to store various data files processed and/or transmitted by the computer, programs in different forms, program instructions that may be executed by the CPU 142, or the like. The processor 140 may also include an Input/Output (I/O) port 146, which is used for input/output streams between the processor 140 and other components (e.g., the storage device 150) in the system for judging the quality of environmental data..

The basic concepts have been described above. For a person skilled in the art, the above detailed disclosure is merely illustrative and does not limit the present disclosure. Although not explicitly stated herein, various modifications, improvements, and amendments may be made to the present disclosure. Such modifications, improvements, and amendments fall within the spirit and scope of the exemplary embodiments of the present disclosure.

Meanwhile, the present disclosure uses specific terms to describe the embodiments of the present disclosure. For example, the terms "one embodiment", "an embodiment", and/or "some embodiments" indicate a certain feature, structure, or characteristic related to at least one embodiment of the present disclosure. Therefore, it should be emphasized and noted that the repeated references to "an embodiment", "one embodiment", or "an alternative embodiment" in different places in the present disclosure do not necessarily refer to the same embodiment. In addition, certain features, structures, or characteristics in one or more embodiments of the present disclosure may be appropriately combined.

In addition, unless explicitly stated in the claims, the order of processing elements and sequences, the use of numbers and letters, or the use of other designations described in the present disclosure are not intended to limit the order of the processes and methods of the present disclosure. Although the above disclosure discusses some invention embodiments currently considered useful through various examples, it should be understood that such details are merely for illustrative purposes, and the appended claims are not limited to the disclosed embodiments. On the contrary, the claims are intended to cover all modifications and equivalent combinations that conform to the essence and scope of the embodiments of the present disclosure. For example, although the system components described above may be implemented by hardware devices, they may also be realized merely by software solutions, such as installing the described system on existing servers or mobile devices.

Similarly, it should be noted that, to simplify the expression of the disclosure and thereby facilitate the understanding of one or more invention embodiments, in the previous descriptions of the embodiments of the present disclosure, multiple features are sometimes merged into a single embodiment, drawing, or description thereof. However, this method of disclosure does not imply that the claimed subject matter requires more features than those recited in the claims. In fact, the features of an embodiment are fewer than all the features of a single disclosed embodiment as described above.

Numbers describing quantities of components or attributes are used in some embodiments. It should be understood that such numbers used for describing the embodiments are modified by the terms "about", "approximately", or "substantially" in some examples. Unless otherwise specified, "about", "approximately", or "substantially" indicates that the stated number allows for a variation of ±20%. Accordingly, in some embodiments, the numerical parameters used in the specification and claims are all approximate values, which may vary according to the required characteristics of individual embodiments. In some embodiments, the numerical parameters shall consider the specified significant digits and adopt the general method of digit retention. Although the numerical ranges and parameters used to confirm the breadth of the scope in some embodiments of the present disclosure are approximate values, in specific embodiments, the setting of such numerical values is as precise as possible within the feasible range.

Each patent, patent application, published patent application, and other material cited in the present disclosure, such as articles, books, specifications, publications, and documents, is hereby incorporated by reference. However, this incorporation excludes any statements that are inconsistent with or conflict with the content of the present disclosure, as well as any document (currently or subsequently associated with this application) that limits the broadest scope of the claims. If any inconsistency or conflict exists between the descriptions, definitions, and/or use of terms in the incorporated materials and those in the present disclosure, the descriptions, definitions, and/or use of terms in the present disclosure shall prevail.

Finally, it should be understood that the embodiments described in the present disclosure are merely provided to illustrate the principles of the embodiments of the present disclosure. Other variations may also fall within the scope of the present disclosure. Therefore, by way of example and not limitation, alternative configurations of the embodiments of the present disclosure may be regarded as consistent with the teachings of the present disclosure. Correspondingly, the embodiments of the present disclosure are not limited to the embodiments explicitly introduced and described in the present disclosure.

## Claims

1. A method for removing flight terminal noise, comprising:

   obtaining noise data from a plurality of flight terminals;
   training a noise removing model based on the noise data and a plurality of historical sound samples, the noise removing model being a machine learning model;
   obtaining first sound data corresponding to image data of a flight terminal to be processed; and
   obtaining second sound data by processing, based on the trained noise removing model, the first sound data, the second sound data being sound data after noise removal.

2. The method of claim 1, wherein the first sound data is obtained based on a control terminal; the control terminal and the flight terminal to be processed are synchronized in time using a preset algorithm; and the first sound data and the image data correspond to each other based on synchronized time.

3. The method of claim 1, wherein when the flight terminal to be processed acquires the image data, a control terminal acquires the first sound data.

4. The method of claim 1, wherein the noise data is acquired based on the plurality of flight terminals with different scenarios, different motion states, and different sound reception distances.

5. A system for removing flight terminal noise, comprising:

an obtaining module configured to obtain noise data from a plurality of flight terminals; a training module configured to train a noise removing model based on the noise data and a plurality of historical sound samples; the historical sound samples including historical noise data and historical ambient sound data; the noise removing model being a machine learning model; and a determination module configured to obtain first sound data corresponding to image data of a flight terminal to be processed, and obtain second sound data by processing, based on the trained noise removing model, the first sound data, the second sound data being sound data after noise removal.

6. The system of claim 5, wherein the determination module includes a control terminal, the control terminal is used to acquire the first sound data, the control terminal and the flight terminal to be processed are time-synchronized using a preset algorithm, and the first sound data and the image data correspond to each other based on synchronized time.

7. The system of claim 5, wherein the determination module is further configured to control a control terminal to acquire the first sound data when the flight terminal to be processed acquires the image data.

8. The system of claim 5, wherein the noise data is acquired based on the plurality of flight terminals with different scenarios, different motion states, and different sound reception distances.

9. A device for removing flight terminal noise, comprising a processor configured to perform the method for removing flight terminal noise of any one of claims 1 to 4.

10. A computer-readable storage medium, storing computer instructions, wherein when a computer reads the computer instructions in the storage medium, the computer executes the method for removing flight terminal noise of any one of claims 1 to 4.

**100**

FIG. 1

**200**

Obtaining Module
210

Training Module
220

Determination Module
230

**FIG. 2**

<u>**300**</u>

Obtaining noise data from a plurality of flight terminals ⟶ 310

Training a noise removing model based on the noise data and a plurality of historical sound samples ⟶ 320

Obtaining first sound data corresponding to image data of a flight terminal to be processed, and obtaining second sound data by processing, based on the trained noise removing model, the first sound data ⟶ 330

**FIG. 3**

**400**

```
┌─────────────────────────────────────────────┐
│  Determining a first timestamp and a second   │  ~ 410
│                timestamp                       │
└─────────────────────────────────────────────┘
                      │
                      ▼
┌─────────────────────────────────────────────┐
│  Obtaining, by a flight terminal to be         │  ~ 420
│  processed, system time from a control         │
│  terminal, and updating, by the flight         │
│  terminal to be processed, system time of the  │
│       flight terminal to be processed          │
└─────────────────────────────────────────────┘
                      │
                      ▼
┌─────────────────────────────────────────────┐
│  Sending, by the flight terminal to be         │  ~ 430
│  processed, a time synchronization request     │
│       to the control terminal periodically     │
└─────────────────────────────────────────────┘
                      │
                      ▼
┌─────────────────────────────────────────────┐
│  Filling, by the control terminal, the first   │  ~ 440
│  timestamp into the time synchronization       │
│  request, and returning, by the control        │
│  terminal, the time synchronization request    │
│       to the flight terminal to be processed   │
└─────────────────────────────────────────────┘
                      │
                      ▼
┌─────────────────────────────────────────────┐
│  Determining a round-trip time delay and a     │  ~ 450
│            time difference value               │
└─────────────────────────────────────────────┘
```

**FIG. 4**

<u>500</u>

```
┌─────────────────────────────────────────────────────────────┐
│                    ┌──────────────────┐                        │
│                    │ Turning on a sound│              510      │
│                    │ collection switch │        ∿              │
│                    └──────────────────┘                        │
│                             │                                  │
│  ┌────────────┐            ◇                                   │
│  │ Prompting to│   No    Whether a                             │
│  │  enable a   │◄────── recording                              │
│  │ permission  │       permission has                          │
│  └────────────┘        been enabled                            │
│                             │                                  │
│                            Yes                                 │
└─────────────────────────────────────────────────────────────┘
```

Turning on a sound collection switch

Whether a recording permission has been enabled — No → Prompting to enable a permission

Yes

A flight terminal takes off — 520

Whether the flight terminal is in a video recording mode — No → Not obtaining first sound data

Yes

Receiving an instruction to start video recording

Starting to obtain the first sound data

Receiving an instruction to end video recording

Stopping obtaining the first sound data

Noise reduction processing on the first sound data

530

Downloading a video

Successful download

Whether there is second sound data corresponding to the video — No → Viewing video data

Yes

Synthesizing audio and video

**FIG. 5**

140

145

Magnetic Disk

146

I/O port

147

COM port

Connected to or accessed from a network

141

142

CPU

143

ROM

144

RAM

**FIG. 6**

## INTERNATIONAL SEARCH REPORT

| | |
|---|---|
| | International application No. |
| | **PCT/CN2024/082168** |

| A. | CLASSIFICATION OF SUBJECT MATTER |
|---|---|

G10L21/0208(2013.01)i; G10L21/0216(2013.01)i; G10L25/30(2013.01)i; B64U101/30(2023.01)i

According to International Patent Classification (IPC) or to both national classification and IPC

| B. | FIELDS SEARCHED |
|---|---|

Minimum documentation searched (classification system followed by classification symbols)

IPC: G10L 21, G10L 25, G10K 11, B64U

Documentation searched other than minimum documentation to the extent that such documents are included in the fields searched

Electronic data base consulted during the international search (name of data base and, where practicable, search terms used)

CNTXT, ENTXTC, WPABSC, VEN, CNKI, GFSOSO: 无人机, 飞行器, 飞机, 航天器, 航空, 飞行, 直升机, 噪声, 噪音, 去除, 消除, 降低, 滤除, 除去, 去掉, 删除, 压抑, 抑制, 削减, 削弱, 减少, 降噪, 消噪, 去噪, 除燥, 减噪, 深度学习, 神经网络, 机器学习, 模型, RNN, DNN, CNN, 训练, 学习, 环境, 历史, 风声, 水声, 自然声, 背景声, 发动机, 风扇, 桨, 翼, 声, 音, aircraft?, drone?, UAV, unmanned aerial vehicle?, spacecraft?, noise, remov+, cancel+, depress+, reduc+, suppress+, model?, Neural network, deep w learn+, DNN, RNN , CNN, sound, audio, acoustic

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117334216 A (HANGZHOU LINGLING TECHNOLOGY CO., LTD.) 02 January 2024 (2024-01-02)<br>claims 1-10, description, paragraphs 4-7 and 19-114 | 1-10 |
| X | CN 113228704 A (SONY CORP.) 06 August 2021 (2021-08-06)<br>description, paragraphs 29-54 | 1, 4, 5, 8-10 |
| Y | CN 113228704 A (SONY CORP.) 06 August 2021 (2021-08-06)<br>description, paragraphs 29-54 | 2-3, 6-7 |
| Y | CN 108353150 A (QUALCOMM INC.) 31 July 2018 (2018-07-31)<br>description, paragraphs 23-38 | 2-3, 6-7 |
| A | US 2018075834 A1 (GOPRO INC.) 15 March 2018 (2018-03-15)<br>entire document | 1-10 |
| A | US 9442496 B1 (AMAZON TECHNOLOGIES INC.) 13 September 2016 (2016-09-13)<br>entire document | 1-10 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 July 2024** | **01 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/082168** |

| C. DOCUMENTS CONSIDERED TO BE RELEVANT | | |
|---|---|---|
| Category* | Citation of document, with indication, where appropriate, of the relevant passages | Relevant to claim No. |
| A | US 9489937 B1 (TRACE LIVE NETWORK INC.) 08 November 2016 (2016-11-08) entire document | 1-10 |

Form PCT/ISA/210 (second sheet) (July 2022)

**INTERNATIONAL SEARCH REPORT**
Information on patent family members

International application No.

**PCT/CN2024/082168**

| Patent document cited in search report | | | Publication date (day/month/year) | Patent family member(s) | | | Publication date (day/month/year) |
|---|---|---|---|---|---|---|---|
| CN | 117334216 | A | 02 January 2024 | None | | | |
| CN | 113228704 | A | 06 August 2021 | US | 2022114997 | A1 | 14 April 2022 |
| | | | | WO | 2020137181 | A1 | 02 July 2020 |
| CN | 108353150 | A | 31 July 2018 | WO | 2017123307 | A2 | 20 July 2017 |
| | | | | WO | 2017123307 | A3 | 17 August 2017 |
| | | | | EP | 3384668 | A2 | 10 October 2018 |
| | | | | US | 2017201714 | A1 | 13 July 2017 |
| | | | | US | 10021339 | B2 | 10 July 2018 |
| US | 2018075834 | A1 | 15 March 2018 | US | 2021358469 | A1 | 18 November 2021 |
| | | | | US | 11670274 | B2 | 06 June 2023 |
| | | | | US | 2023290327 | A1 | 14 September 2023 |
| | | | | US | 9984672 | B2 | 29 May 2018 |
| | | | | US | 2020160825 | A1 | 21 May 2020 |
| | | | | US | 11024279 | B2 | 01 June 2021 |
| | | | | US | 2018322860 | A1 | 08 November 2018 |
| | | | | US | 10546571 | B2 | 28 January 2020 |
| US | 9442496 | B1 | 13 September 2016 | WO | 2017048464 | A1 | 23 March 2017 |
| | | | | US | 2018286372 | A1 | 04 October 2018 |
| | | | | US | 10468008 | B2 | 05 November 2019 |
| | | | | JP | 2018534188 | A | 22 November 2018 |
| | | | | JP | 6704041 | B2 | 03 June 2020 |
| | | | | EP | 3350800 | A1 | 25 July 2018 |
| | | | | EP | 3350800 | B1 | 24 May 2023 |
| | | | | US | 2017154618 | A1 | 01 June 2017 |
| | | | | US | 9786265 | B2 | 10 October 2017 |
| | | | | US | 2018040316 | A1 | 08 February 2018 |
| | | | | US | 9959860 | B2 | 01 May 2018 |
| | | | | JP | 2020097416 | A | 25 June 2020 |
| | | | | JP | 7033618 | B2 | 10 March 2022 |
| | | | | CA | 2998207 | A1 | 23 March 2017 |
| | | | | CA | 2998207 | C | 25 August 2020 |
| US | 9489937 | B1 | 08 November 2016 | None | | | |

Form PCT/ISA/210 (patent family annex) (July 2022)

**REFERENCES CITED IN THE DESCRIPTION**

**Patent documents cited in the description**

- CN 202311186541